# EUROPÄISCHE PATENTSCHRIFT

(11) **EP 2 567 427 B1**
(45) Veröffentlichungstag und Bekanntmachung des Hinweises auf die Patenterteilung: **29.11.2017**
(21) Anmeldenummer: 11752149.2
(22) Anmeldetag: 17.08.2011
(51) Int. Cl.: G06F 11/07

(54) **VERFAHREN UND ANORDNUNG ZUR ERFASSUNG EINER ANZAHL VON STECKZYKLEN EINER STECKVERBINDUNGS-KOMPONENTE**
METHOD AND ARRANGEMENT FOR DETECTING AN AMOUNT OF MATING CYCLES OF A PLUG CONNECTION COMPONENT
PROCÉDÉ ET DISPOSITIF DE DÉTECTION DU NOMBRE DE CYCLES DE CONNEXION/DÉCONNEXION D'UN ÉLÉMENT D'UNE CONNEXION À FICHE

(30) Priorität: 14.09.2010 DE 102010045329
(43) Veröffentlichungstag der Anmeldung: 13.03.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2011/064129
(87) Internationale Veröffentlichungsnummer: WO 2012/034806

(56) Entgegenhaltungen:
- WO-A1-2009/099523
- DE-A1- 19 500 113
- DE-A1-102009 044 140
- US-A1- 2006 044 148
- US-B1- 7 321 313
- TRUE CORPORATION: "TRU MEIA Products Mating Durability Test Report", , 31. Oktober 2006 (2006-10-31), Seiten 1-9, XP55008673, Gefunden im Internet: URL:http://www.tru-con.com/library/TRU_MEI A_DurabilityReport.pdf [gefunden am 2011-10-04]

## Beschreibung

Eine Steckverbindung besteht aus einer männlichen und einer weiblichen Komponente. Die männliche Steckverbindungs-Komponente wird als Stecker bezeichnet. Bei der weiblichen Steckverbindungs-Komponente werden Buchsen, Steckdosen und Kupplungen unterschieden. Während Steckdosen üblicherweise an einer Wand installiert werden, bezeichnen Buchsen weibliche Steckverbindungs-Komponenten an Geräten. Bei Verlängerungskabeln werden die weiblichen Steckverbindungs-Komponenten als Kupplung bezeichnet.

Steckverbindungen dienen zum Verbinden und Trennen von elektrischen und optischen Leitungen. Die entsprechenden Leitungen dienen beispielsweise der Datenkommunikation, z. B. für einen Wartungszugang. So finden sich gängige Steckverbindungs-Komponenten beispielsweise an den Enden von RJ45-, M12-, RS232- oder USB-Kabeln. Ein weiterer wichtiger Einsatz von Steckverbindungs-Komponenten ist deren Verwendung bei Ladekabeln, welche der Stromversorgung beispielsweise eines Elektroautos dienen.

Ein Steckzyklus bezeichnet die Abfolge von Einstecken und Ausstecken einer Steckverbindungs-Komponente. Unter dem Begriff "Steckvorgang" wird im Folgenden entweder das Einstecken, das Ausstecken oder ein gesamter Steckzyklus verstanden.

Aus der WO 2009/099523 A1 ist bekannt, dass in der Medizintechnik die Anzahl der Steckzyklen von Steckern begrenzt werden soll, um Anforderungen an Sterilität oder andere Vorschriften zu erfüllen. Hierzu schlägt die Druckschrift eine mechanische Modifikation eines Steckers vor, welche die Anzahl der Steckzyklen für den Stecker begrenzt. Die Begrenzung wird durch eine mechanische, rotierende Komponente erzielt, welche nach Ablauf der erlaubten Anzahl von Steckzyklen eine weitere Verwendung des Steckers unterbindet.

Weiterhin sind aus dem Stand der Technik Verfahren bekannt, um eine Produktidentität zu ermitteln. Neben der allgemein bekannten RFID- und Barcode-Technologie ist hierfür auch ein Produktauthentisierungsmodul Infineon ORIGA® bekannt, vgl. http://www.infineon.com/export/sites/default/en/product/promo pages/origa/ORIGA.pdf, erhältlich im Internet am 09.09.2010. Dieses Produktauthentisierungsmodul ist in der Lage, eine Produktidentität manipulationsgeschützt zu erfassen.

Weiterhin sind Systeme zur Überwachung von Logistikketten bekannt. Dabei werden Objekte wie Container, Paletten, Medikamentenverpackungen usw. mit einem Identifikator versehen. Dieser wird an vorgegebenen Orten erfasst. Eine Information über Erfassungsort und Erfassungszeit wird in eine Datenbank eingetragen.

Die aus dem Stand der Technik bekannte mechanische Begrenzung der Anzahl von Steckzyklen eines Steckers erfordert eine Modifikation der Konstruktion des Steckers, welche dessen Produktionskosten erhöht.

Die DE 19500113 A1 offenbart ein Verfahren zur Erfassung einer Anzahl von Steckzyklen, bei dem eine Recheneinheit einen Zähler mit einem Schwellwert vergleicht.

Aus der US 7,321,313 B1 ist ein Verfahren zur Erfassung einer Anzahl von Steckzyklen eines Steckers entnehmbar, bei dem ein Detektionsmittel einen Steckvorgang des Steckers detektiert. Daraufhin aktualisiert ein Mikroprozessor einen Steckzyklenzähler in einem elektronischen Speicher. Eine Recheneinheit vergleicht den Steckzyklenzähler mit einem Schwellwert.

Es stellt sich daher die Aufgabe, ein Verfahren und eine Anordnung zur Erfassung einer Anzahl von Steckzyklen einer Steckverbindungs-Komponente anzugeben, welche eine Alternative zum bekannten Stand der Technik bereitstellen.

Diese Aufgabe wird erfindungsgemäß dadurch gelöst, dass ein Detektionsmittel einen Steckvorgang der Steckverbindungs-Komponente detektiert, woraufhin ein Mikroprozessor einen Steckzyklenzähler in einem elektronischen Speicher aktualisiert. Eine Recheneinheit vergleicht den Steckzyklenzähler mit einem Schwellwert.

Das Verfahren ist dadurch gekennzeichnet, dass die Steckverbindungs-Komponente den elektronischen Speicher und/oder einen Identifikator, und eine RFID-Schnittstelle zum Auslesen des Steckzyklenzählers oder des Identifikators aufweist, und der Steckzyklenzähler oder der Identifikator über die RFID-Schnittstelle der Steckverbindungs-Komponente durch ein Lesegerät oder eine Antenne ausgelesen wird. Weiterhin schaltet ein Schalter eine elektrische Verbindung zu der Steckverbindungs-Komponente, sofern der Steckzyklenzähler den Schwellwert nicht überschreitet. Alternativ trennt der Schalter eine elektrische Verbindung zu der Steckverbindungs-Komponente, sofern der Steckzyklenzähler den Schwellwert überschreitet. Alternativ oder ergänzend erzeugt die Recheneinheit eine Warnmeldung, sofern der Steckzyklenzähler den Schwellwert überschreitet.

Die Anordnung zur Erfassung einer Anzahl von Steckzyklen einer Steckverbindungs-Komponente weist eine Steckverbindungs-Komponente und ein Detektionsmittel auf, welches zur Detektion eines Steckvorgangs der Steckverbindungs-Komponente ausgelegt ist. Die Anordnung beinhaltet ferner einen Mikroprozessor, welcher zur elektronischen Aktualisierung eines Steckzyklenzählers nach jedem Steckvorgang programmiert ist. Die Anordnung umfasst weiterhin einen elektronischen Speicher , welcher zur Speicherung des Steckzyklenzählers eingerichtet ist.

Die Anordnung ist dadurch gekennzeichnet, dass die Steckverbindungs-Komponente den elektronischen Speicher und/oder einen Identifikator, und eine RFID-Schnittstelle zum Auslesen des Steckzyklenzählers oder des Identifikators aufweist. Weiterhin weist die Anordnung ein Lesegerät oder eine Antenne zum Auslesen des Steckzyklenzählers oder des Identifikators auf. Die Anordnung umfasst ferner eine Recheneinheit, programmiert zum Vergleich des Steckzyklenzählers mit einem Schwellwert. Die Anordnung weist weiterhin einen Schalter auf, eingerichtet zur Schaltung einer elektrischen Verbindung zu der Steckverbindungs-Komponente, sofern der Steckzyklenzähler den Schwellwert nicht überschreitet, oder zur Trennung einer elektrischen Verbindung zu der Steckverbindungs-Komponente, sofern der Steckzyklenzähler den Schwellwert überschreitet. Alternativ oder ergänzend ist die Recheneinheit programmiert zur Erzeugung einer Warnmeldung, sofern der Steckzyklenzähler den Schwellwert überschreitet.

Der Erfindung liegt die Erkenntnis zugrunde, dass es außer den zuvor genannten medizintechnischen Anforderungen auch weitere Überlegungen und Gründe gibt, eine Anzahl von Steckzyklen eines Steckverbinders zu überwachen. Die Erfindung beruht auf der Einsicht, dass die Anzahl von Steckzyklen, während deren eine korrekte Funktion des Steckverbinders gewährleistet werden kann, begrenzt ist. Steckverbinder unterliegen grundsätzlich einem Verschleiß, welcher ihre Lebensdauer begrenzt.

Der Erfindung liegt insbesondere die Erkenntnis zugrunde, dass zunehmend auch solche Steckverbinder, welche nicht für eine raue Industrieumgebung und häufige Steckzyklen vorgesehen sind, dennoch für solche Anwendungszwecke verwendet werden. So wird beispielsweise ein Netzwerkzugang für eine Wartung einer Industrieanlage heutzutage oft über eine herkömmliche RJ45-Ethernetschnittstelle realisiert.

Das Verfahren und die Anordnung gewährleisten eine hohe Verfügbarkeit der Steckverbindungs-Komponente, da die Komponente durch die Ermittlung der Anzahl von Steckzyklen rechtzeitig ausgetauscht werden kann. Weiterhin wird bei energieführenden Kabeln wie etwa Ladekabeln oder Stromkabeln eine Gefährdung des Menschen durch defekte Stecker vermieden.

In einem ersten Fall wird der Steckzyklenzähler hierbei mit Null initialisiert und nach jedem Steckvorgang inkrementiert. Hierbei ist der Schwellwert eine erlaubte Anzahl von Steckvorgängen. In einem zweiten Fall wird der Steckzyklenzähler mit der erlaubten Anzahl von Steckvorgängen initialisiert und nach jedem Steckzyklus dekrementiert. Der Schwellwert ist dann z.B. 1. Eine Überschreitung des Schwellwerts liegt im ersten Fall genau dann vor, wenn der Steckzyklenzähler größer als der Schwellwert ist. Im zweiten Fall liegt eine Überschreitung des Schwellwerts vor, wenn der Steckzyklenzähler kleiner als der Schwellwert ist.

Diese Weiterbildung hat den Vorteil, dass ein Benutzer vor einem Stromschlag durch einen defekten Steckverbinder geschützt wird..

Gemäß einer Ausführungsform wird der Steckzyklenzähler bei der Aktualisierung inkrementiert. Alternativ wird der Steckzyklenzähler bei der Aktualisierung dekrementiert

In einer anderen Weiterbildung liegt der elektronische Speicher auf einem Server. Ein Identifikator der Steckverbindungs-Komponente, insbesondere eine Seriennummer, URL oder NAI wird auf den Server übertragen. Der Server identifiziert den Steckzyklenzähler anhand des Identifikators in einer Menge von Zählern.

Gemäß einer Ausführungsform ist das Detektionsmittel ein Sensor, insbesondere ein mechanischer Taster oder Näherungsschalter. Alternativ ist das Detektionsmittel zur Detektion einer elektrischen Verbindung anhand eines Innenwiderstands eingerichtet.

In einer alternativen Ausführungsform ist der elektronische Speicher in der Steckverbindungs-Komponente angeordnet. Ferner umfasst die Erfindung einen maschinenlesbaren Datenträger, auf dem ein Mikroprogramm gespeichert ist, welches das Verfahren ausführt, wenn es in einem Mikroprozessor abgearbeitet wird. Die Erfindung umfasst außerdem ein Mikroprogramm, welches in einem Mikroprozessor abgearbeitet wird und dabei das Verfahren ausführt.

Im Folgenden werden Ausführungsbeispiele der Erfindung näher erläutert. Es zeigen:
- Figur 1: eine Steckverbindung gemäß einem ersten Ausführungsbeispiel
- Figur 2: eine Steckverbindung gemäß einem zweiten Ausführungsbeispiel
- Figur 3: eine Steckverbindung gemäß einem dritten Ausführungsbeispiel
- Figur 4: eine Steckverbindung gemäß einem vierten Ausführungsbeispiel.

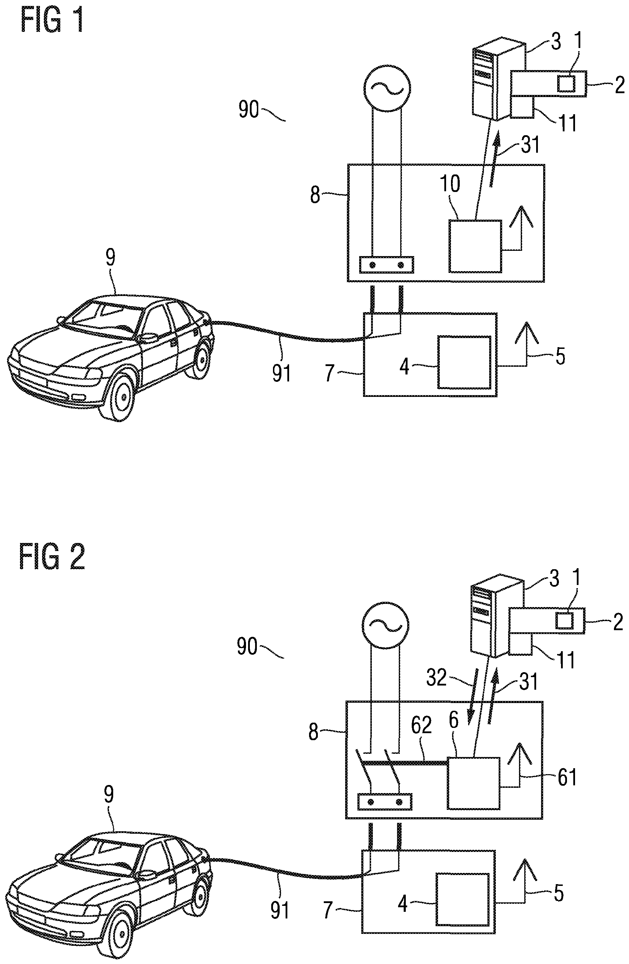

Figur 1 zeigt eine Ladestation 90, an die ein Elektroauto 9 mit einem Ladekabel 91 angeschlossen wird. Die Ladestation 90 ermöglicht eine Erfassung einer Anzahl von Steckzyklen einer Steckverbindungs-Komponente 7, hier eines Steckers. Zu diesem Zweck verfügt die Steckverbindungs-Komponente 7 über einen Identifikator 4. Der Identifikator 4 ist beispielsweise als Barcode ausgestaltet. In diesem Fall verfügt eine Steckdose 8 der Ladestation 90 über ein Lesegerät 10, welches als Barcode-Scanner ausgestaltet ist. Wenn der Identifikator 4 dagegen in einem RFID-Chip oder -Etikett gespeichert ist, verfügt die Steckverbindungs-Komponente 7 über eine RFID-Schnittstelle 5. Das Lesegerät 10 ist dann zur Auslesung des RFID-Etiketts oder des RFID-Chips im Inneren eines Gehäuses der Steckverbindungs-Komponente 7 eingerichtet.

Das Auslesen des Identifikators 4 durch das Lesegerät 10 erfolgt beim Herstellen der Steckverbindung. Daraufhin wird der Identifikator 4 mit einer Anfrage 31 an einen Server 3 übertragen. Der Server 3 verfügt über einen elektronischen Speicher 2, in welchem ein Steckzyklenzähler 1 für die Steckverbindungs-Komponente 7 abgelegt ist. Um den Steckzyklenzähler 1 für die Steckverbindungs-Komponente 7 zu identifizieren, benötigt der Server 3 den Identifikator 4. Anschließend inkrementiert der Server 3 den Steckzyklenzähler 1 mit einem Mikroprozessor 11.

Der Identifikator 4 ist beispielsweise eine Seriennummer (z.B. 1376543). Er kann aber auch eine URL sein (z.B. http://count.siemens.com/up?13746543) oder als NAI (Abkürzung für die englische Bezeichnung "network access identifier", z.B. 1376543@count.siemens.com) ausgestaltet sein. Hierbei wird eine Adressinformation des Servers 3 direkt im Identifikator 4 codiert.

Alternativ zu Figur 1 kann auch ein Stecker, der über ein Ladekabel mit einer Ladesäule verbunden ist, mit einer Steckdose oder Buchse des Elektroautos 9 verbunden werden.

In einer Abwandlung des in Figur 1 gezeigten ersten Ausführungsbeispiels entfällt der Server 3. In diesem Fall ist der elektronische Speicher 2, der Mikroprozessor 11 und der Steckzyklenzähler 1 in der Steckdose 8 oder einem anderen Teil der Ladestation 90 untergebracht. Dies hat den Vorteil, dass kein separater Server 3 benötigt wird.

Figur 2 zeigt erneut eine Ladestation 90 für ein Elektroauto 9. Auch hier wird ein Ladekabel 91 mit einer Steckverbindungs-Komponente 7, welche einen Identifikator 4 beinhaltet und eine RFID-Schnittstelle 5 aufweist, in eine Steckdose 8 gesteckt. Dabei erfasst eine Recheneinheit 6 in der Steckdose 8 oder in einem anderen Teil der Ladestation 90 mithilfe einer Antenne 61 den Identifikator 4 der Steckverbindungs-Komponente 7, welcher über die RFID-Schnittstelle 5 bei Einstecken der Steckverbindungs-Komponente 7 kommuniziert wird. Daraufhin sendet die Recheneinheit 6 eine Anfrage 31 an einen Server 3, welcher, wie im ersten Ausführungsbeispiel beschrieben, mithilfe eines Mikroprozessors 11 einen Steckzyklenzähler 1 in einem elektronischen Speicher 2 inkrementiert. Hierbei wird nun jedoch der Steckzyklenzähler 1 mit einem Schwellwert verglichen. Der Schwellwert ist eine Maximalzahl erlaubter Steckzyklen für die Steckverbindungs-Komponente 7. Er kann in einer Datenbank des Servers 3 oder auf der Steckverbindungs-Komponente 7 abgelegt sein. Wenn mit dem Schwellwert die erlaubte Anzahl von Steckzyklen für die Steckverbindungs-Komponente 7 überschritten ist, empfängt die Recheneinheit 6 von dem Server 3 eine Antwort 32, welche eine Verwendung der Steckverbindungs-Komponente 7 untersagt. Daraufhin gibt die Recheneinheit 6 beispielsweise eine Warnmeldung mithilfe einer Warnleuchte an einen Benutzer aus oder trägt die Warnung in einem Fehler- oder Diagnosespeicher ein. Die Recheneinheit 6 ist beispielsweise ein digitaler Schaltkreis, ein Mikroprozessor oder ein Mikrokontroller.

In Figur 2 ist gezeigt, dass die Recheneinheit 6 aufgrund der Antwort 32 des Servers 3, welche eine Überschreitung des Schwellwerts anzeigt, mithilfe eines Schalters 62 eine elektrische Verbindung zu der Steckverbindungs-Komponente 7 trennt. Die Nutzung der Steckverbindungs-Komponente 7 bzw. des Ladekabels 91 wird somit unterbunden.

Eine elektrische Verbindung zum Aufladen des Elektroautos 9 wird nur hergestellt, sofern der Schwellwert von Steckzyklen für die Steckverbindungs-Komponente 7 noch nicht überschritten ist. In diesem Fall sendet der Server 3 als Antwort 32 ein OK, woraufhin die elektrische Verbindung durch Schließen des Schalters 62 hergestellt wird.

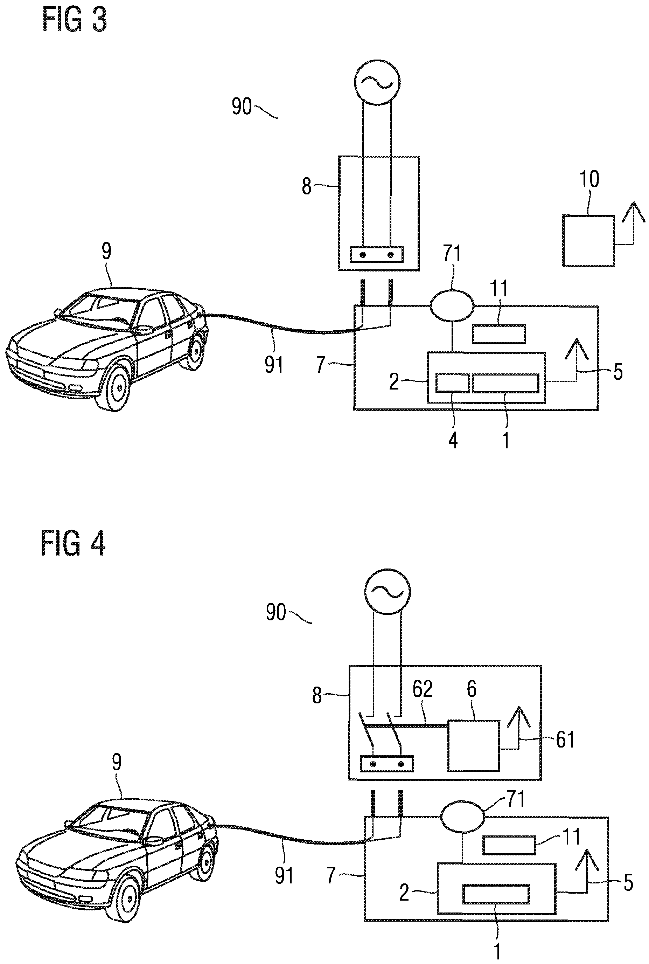

Figur 3 zeigt ein drittes Ausführungsbeispiel für die Ladestation 90. In diesem Fall weist die Steckverbindungs-Komponente 7 des Ladekabels 91 einen eigenen elektronischen Speicher 2 auf, in welchen nicht nur der Identifikator 4, sondern auch der Steckzyklenzähler 1 abgespeichert ist. Weiterhin verfügt die Steckverbindungs-Komponente 7 auch über einen Mikroprozessor 11, welcher zur Inkrementierung des Steckzyklenzählers 1 geeignet ist. Der Mikroprozessor 11 kann hierbei beispielsweise in einem RFID-Chip untergebracht sein und wahlweise auch als Mikrocontroller oder einfacher digitaler Schaltkreis ausgestaltet sein. Um das Einstecken der Steckverbindungs-Komponente 7 in eine Steckdose 8 zu erkennen, besitzt die Steckverbindungs-Komponente 7 einen Sensor 71, welcher das Einstecken registriert. Daraufhin wird der Steckzyklenzähler 1 durch den Mikroprozessor 11 inkrementiert. Die Steckverbindungs-Komponente 7 zählt also selbst ihre Steckzyklen.

Als Sensor eignet sich beispielsweise ein mechanischer Taster, welcher beim Einstecken der Steckverbindungs-Komponente 7 geschlossen wird, oder auch ein Näherungsschalter. Alternativ kann das Herstellen einer elektrischen Verbindung der Steckkontakte der Steckverbindungs-Komponente 7 über deren Innenwiderstand detektiert werden.

Der Steckzyklenzähler 1 ist auch in Figur 3 über eine RFID-Schnittstelle 5 auslesbar. Hierzu ist in Figur 3 ein Lesegerät 10 gezeigt. Dabei kann der Steckzyklenzähler 1 beim Herstellen einer Steckverbindung ausgelesen werden, aber auch zu jedem anderen Zeitpunkt.

Figur 4 zeigt ein viertes Ausführungsbeispiel für die Ladestation 90. Ein Elektroauto 9 wird mit einem Ladekabel 91, welches über eine Steckverbindungs-Komponente 7 verfügt, an eine Steckdose 8 angeschlossen. Hierbei beinhaltet die Steckverbindungs-Komponente 7 erneut einen elektronischen Speicher 2, in welchem ein Steckzyklenzähler 1 abgespeichert ist. Der elektronische Speicher 2 ist beispielsweise in einem RFID-Chip angeordnet, welcher auch einen Mikroprozessor 11 sowie eine RFID-Schnittstelle 5 umfasst. Der elektronische Speicher 2 und der Mikroprozessor 11 können hierbei gemeinsam in einem Mikrokontroller auf dem RFID-Chip untergebracht sein. Auch in diesem Ausführungsbeispiel ist ein Sensor 71 zur Erkennung des Einsteckens der Steckverbindungs-Komponente 7 vorgesehen.

Während oder nach dem Einstecken liest eine Recheneinheit 6 in der Steckdose 8 mithilfe einer Antenne 61 den Steckzyklenzähler 1 der Steckverbindungs-Komponente 7 aus. Nur falls dieser einen Schwellwert unterschreitet, wird eine elektrische Verbindung durch Schließen eines Schalters 62 hergestellt. Der Schwellwert ist hierbei entweder in der Steckdose 8 oder im elektronischen Speicher 2 der Steckverbindungs-Komponente 7 gespeichert. Die Recheneinheit 6 ist beispielsweise ein digitaler Schaltkreis, ein Mikroprozessor oder ein Mikrokontroller.

Die vorangegangenen Ausführungsbeispiele betrafen ein Ladekabel bzw. eine Ladestation für ein Elektroauto. Weitere Ausführungsbeispiele betreffen beliebige andere elektrische oder optische Steckverbinder, beispielsweise für Datenkabel zum Verbinden eines Wartungsgeräts mit einer Industrieanlage oder einer Automatisierungskomponente. Dazu kann z.B. ein RJ45-Steckverbinder, ein M12-Steckverbinder, ein RS232-Steckverbinder oder ein USB-Steckverbinder verwendet werden. Die betreffenden Steckverbindungs-Komponenten werden hierbei wie zuvor am Beispiel der Ladestation beschrieben ausgestaltet.

Folglich sind die zuvor beschriebenen Steckverbindungs-Komponenten, Lesegeräte, Server usw. auch anwendbar, um eine Automatisierungskomponente mit einem Steuerungsnetzwerk, z.B. einem Ethernet-Netzwerk oder einem IP-Netzwerk, zu verbinden. Falls z.B. bei einer flexiblen Fertigung regelmäßig unterschiedliche Automatisierungskomponenten mit einem Steuerungsnetzwerk verbunden werden, so ist anhand des Steckzyklenzählers eine Überbeanspruchung einer Steckverbindungs-Komponente erkennbar. Dadurch kann diese rechtzeitig ausgewechselt werden. Eine Gefährdung der Bediener durch einen beschädigten spannungsführenden Steckverbinder wird somit vermieden. Ebenso wird ein Ausfall der Automatisierungsanlage oder eine fehlerhafte Durchführung von Automatisierungsvorgängen, die durch eine durch einen überbeanspruchten Steckverbinder gestörte Übertragung von Steuerdaten verursacht werden, vermieden.

Bei den vorangegangenen Ausführungsbeispielen wurde bei einem Steckvorgang einer Steckverbindungs-Komponente ein zugeordneter Steckzyklenzähler inkrementiert. Inkrementieren bedeutet, dass der Steckzyklenzähler jeweils um den Wert eins erhöht wird. Alternativ kann der Steckzyklenzähler nach jedem Steckvorgang um den Wert eins vermindert werden. In diesem Fall wird der Steckzyklenzähler mit einer Maximalzahl erlaubter Steckvorgänge initialisiert. Der Steckzyklenzähler gibt daraufhin die Anzahl aktuell noch zulässiger Steckvorgänge an.

Die beschriebenen Ausführungsbeispiele können frei miteinander kombiniert werden.

## Patentansprüche

1. Verfahren zur Erfassung einer Anzahl von Steckzyklen einer Steckverbindungs-Komponente (7),
- bei dem ein Detektionsmittel einen Steckvorgang der Steckverbindungs-Komponente (7) detektiert, woraufhin ein Mikroprozessor (11) einen Steckzyklenzähler (1) in einem elektronischen Speicher (2) aktualisiert,
- bei dem eine Recheneinheit (6) den Steckzyklenzähler (1) mit einem Schwellwert vergleicht,
**dadurch gekennzeichnet, dass**
- die Steckverbindungs-Komponente (7) den elektronischen Speicher (2) und/oder einen Identifikator (4), und eine RFID-Schnittstelle (5) zum Auslesen des Steckzyklenzählers (1) oder des Identifikators (4) aufweist, und
- der Steckzyklenzähler (1) oder der Identifikator (4) über dieRFID-Schnittstelle (5) der Steckverbindungs-Komponente (7) durch ein Lesegerät (10) oder eine Antenne (61) ausgelesen wird,
wobei
- ein Schalter (62) eine elektrische Verbindung zu der Steckverbindungs-Komponente (7) schaltet, sofern der Steckzyklenzähler (1) den Schwellwert nicht überschreitet, oder der Schalter (62) eine elektrische Verbindung zu der Steckverbindungs-Komponente (7) trennt, sofern der Steckzyklenzähler (1) den Schwellwert überschreitet, und/oder
- die Recheneinheit (6) eine Warnmeldung erzeugt, sofern der Steckzyklenzähler (1) den Schwellwert überschreitet.

2. Verfahren nach Anspruch 1,
- bei dem der Steckzyklenzähler (1) bei der Aktualisierung inkrementiert wird, oder
- bei dem der Steckzyklenzähler (1) bei der Aktualisierung dekrementiert wird.

3. Verfahren nach Anspruch 1 oder 2,
- bei dem der elektronische Speicher (2) auf einem Server (3) liegt,
- bei dem der Identifikator (4) der Steckverbindungs-Komponente (7), insbesondere eine Seriennummer, URL oder NAI, auf den Server (3) übertragen wird, und
- bei dem der Server (3) anhand des Identifikators (4) den Steckzyklenzähler (1) in einer Menge von Zählern identifiziert.

4. Anordnung zur Erfassung einer Anzahl von Steckzyklen einer Steckverbindungs-Komponente (7),
- mit einer Steckverbindungs-Komponente (7),
- mit einem Detektionsmittel, ausgelegt zur Detektion eines Steckvorgangs der Steckverbindungs-Komponente (7),
- mit einem Mikroprozessor (11), programmiert zur elektronischen Aktualisierung eines Steckzyklenzählers (1) nach jedem Steckvorgang,
- mit einem elektronischen Speicher (2), eingerichtet zur Speicherung des Steckzyklenzählers (1),
**dadurch gekennzeichnet, dass**
- die Steckverbindungs-Komponente (7) den elektronischen Speicher (2) und/oder einen Identifikator (4), und eine RFID-Schnittstelle (5) zum Auslesen des Steckzyklenzählers (1) oder des Identifikators (4) aufweist,
- die Anordnung ein Lesegerät (10) oder eine Antenne (61) zum Auslesen des Steckzyklenzählers (1) oder des Identifikators (4) aufweist,
- die Anordnung eine Recheneinheit (6) aufweist, programmiert zum Vergleich des Steckzyklenzählers (1) mit einem Schwellwert,
wobei
- die Anordnung einen Schalter (62) aufweist, eingerichtet zur Schaltung einer elektrischen Verbindung zu der Steckverbindungs-Komponente (7), sofern der Steckzyklenzähler (1) den Schwellwert nicht überschreitet, oder zur Trennung einer elektrischen Verbindung zu der Steckverbindungs-Komponente (7), sofern der Steckzyklenzähler (1) den Schwellwert überschreitet, und/oder
- die Recheneinheit (6) programmiert ist zur Erzeugung einer Warnmeldung, sofern der Steckzyklenzähler (1) den Schwellwert überschreitet.

5. Anordnung nach Anspruch 4,
- bei dem das Detektionsmittel ein Sensor (71), insbesondere ein mechanischer Taster oder ein Näherungsschalter ist, oder
- bei dem das Detektionsmittel zur Detektion einer elektrischen Verbindung anhand eines Innenwiderstands eingerichtet ist.

6. Anordnung nach Anspruch 4 oder 5,
- bei dem der elektronische Speicher (2) auf einem Server (3) angeordnet ist.

7. Anordnung nach einem der Ansprüche 4 oder 5,
- bei dem der elektronische Speicher (2) in der Steckverbindungs-Komponente (7) angeordnet ist.

8. Maschinenlesbarer Datenträger,
- auf dem ein Mikroprogramm gespeichert ist, welches das Verfahren nach einem der Ansprüche 1 bis 3 ausführt, wenn es in einem Mikroprozessor abgearbeitet wird.

9. Mikroprogramm,
- welches in einem Mikroprozessor abgearbeitet wird und dabei das Verfahren nach einem der Ansprüche 1 bis 3 ausführt.

## Claims

1. Method for detecting a quantity of plug cycles of a plug connection component (7),
- wherein a detection means detects a plugging procedure of the plug connection component (7), whereupon a microprocessor (11) updates a plug cycle counter (1) in an electronic memory store (2),
- wherein a computer unit (6) compares the plug cycle counter (1) with a threshold value,
**characterised in that**
- the plug connection component (7) comprises the electronic memory store (2) and/or an identifier (4), and an RFID interface (5) for reading out the plug cycle counter (1) or the identifier (4), and
- the plug cycle counter (1) or the identifier (4) is read out by a reading device (10) or an antenna (61) via the RFID interface (5) of the plug connection component (7),
wherein
- a switch (62) switches an electrical connection to the plug connection component (7) provided the plug cycle counter (1) does not exceed the threshold value, or the switch (62) opens an electrical connection to the plug connection component (7) as soon as the plug cycle counter (1) exceeds the threshold value and/or
- the computer unit (6) generates a warning if the plug cycle counter (1) exceeds the threshold value.

2. Method according to claim 1,
- wherein the plug cycle counter (1) is incremented on updating, or
- wherein the plug cycle counter (1) is decremented on updating.

3. Method according to claim 1 or 2,
- wherein the electronic memory store (2) is provided on a server (3),
- wherein the identifier (4) of the plug connection component (7), in particular a serial number, URL or NAI is transferred to the server (3), and
- wherein the server (3) identifies the plug cycle counter (1) from among a plurality of counters based on the identifier (4).

4. Arrangement for detecting a number of plug cycles of a plug connection component (7),
- with a plug connection component (7),
- with a detection means configured for detecting a plugging procedure of the plug connection component (7),
- with a microprocessor (11), programmed for electronically updating a plug cycle counter (1) after each plugging procedure,
- with an electronic memory store (2), configured for storing the plug cycle counter (1),
**characterised in that**
- the plug connection component (7) comprises the electronic memory store (2) and/or an identifier (4), and an RFID interface (5) for reading out the plug cycle counter (1) or the identifier (4),
- the arrangement comprises a reading device (10) or an antenna (61) for reading out the plug cycle counter (1) or the identifier (4),
- the arrangement comprises a computer unit (6), programmed for comparing the plug cycle counter (1) with a threshold value,
wherein
- the arrangement comprises a switch (62), configured for switching an electrical connection to the plug connection component (7) provided the plug cycle counter (1) does not exceed the threshold value, or for opening an electrical connection to the plug connection component (7) as soon as the plug cycle counter (1) exceeds the threshold value and/or
- the computer unit (6) is programmed to generate a warning if the plug cycle counter (1) exceeds the threshold value.

5. Arrangement according to claim 4,
- wherein the detection means is a sensor (71), in particular a mechanical sensor or a proximity switch, or
- wherein the detection means is configured for detecting an electrical connection based on an internal resistance.

6. Arrangement according to claim 4 or 5,
- wherein the electronic memory store (2) is provided on a server (3).

7. Arrangement according to one of claims 4 or 5,
- wherein the electronic memory store (2) is arranged in the plug connection component (7).

8. Machine-readable data carrier,
- on which is stored a microprogram which carries out the method according to one of claims 1 to 3 when said program is executed in a microprocessor.

9. Microprogram,
- which is executed in a microprocessor and thus carries out the method according to one of claims 1 to 3.

## Revendications

1. Procédé de détection d'un nombre de cycles de connexion d'un élément de connexion à fiche (7), selon lequel
- un moyen de détection détecte une opération d'enfichage de l'élément de connexion à fiche (7), suite à quoi un microprocesseur (11) met à jour un compteur de cycles de connexion (1) dans une mémoire électronique (2),
- une unité de calcul (6) compare le compteur de cycles de connexion (1) avec une valeur seuil,
**caractérisé en ce que**
- l'élément de connexion à fiche (7) comporte la mémoire électronique (2) et/ou un identifiant (4) et une interface RFID (5) pour lire le compteur de cycles de connexion (1) ou l'identifiant (4) et
- le compteur de cycles de connexion (1) ou l'identifiant (4) sont lus via l'interface RFID (5) de l'élément de connexion à fiche (7) par un lecteur (10) ou une antenne (61),
- un commutateur (62) commutant une liaison électrique vers l'élément de connexion à fiche (7), dans la mesure où le compteur de cycles de connexion (1) ne dépasse pas la valeur seuil, ou le commutateur (62) coupant une liaison électrique vers l'élément de connexion à fiche (7), dans la mesure où le compteur de cycles de connexion (1) dépasse la valeur seuil,
et/ou
- l'unité de calcul (6) génère un avertissement, dans la mesure où le compteur de cycles de connexion (1) dépasse la valeur seuil.

2. Procédé selon la revendication 1, selon lequel
- le compteur de cycles de connexion (1) est incrémenté lors de la mise à jour ou
- le compteur de cycles de connexion (1) est décrémenté lors de la mise à jour.

3. Procédé selon la revendication 1 ou 2, selon lequel
- la mémoire électronique (2) se trouve sur un serveur (3),
- l'identifiant (4) de l'élément de connexion à fiche (7), et plus particulièrement un numéro de série, une URL ou un NAI, est transmis au serveur (3) et
- le serveur (3) identifie le compteur de cycles de connexion (1) dans un ensemble de compteurs à l'aide de l'identifiant (4).

4. Dispositif de détection d'un nombre de cycles de connexion d'un élément de connexion à fiche (7), comportant :
- un élément de connexion à fiche (7) ;
- un moyen de détection conçu pour détecter une opération d'enfichage de l'élément de connexion à fiche (7) ;
- un microprocesseur (11) programmé pour la mise à jour électronique d'un compteur de cycles de connexion (1) après chaque opération d'enfichage,
- une mémoire électronique (2) configurée pour sauvegarder le compteur de cycles de connexion (1),
**caractérisé en ce que**
- l'élément de connexion à fiche (7) comporte la mémoire électronique (2) et/ou un identifiant (4), et une interface RFID (5) pour lire le compteur de cycles de connexion (1) ou l'identifiant (4),
- le dispositif comporte un lecteur (10) ou une antenne (61) pour lire le compteur de cycles de connexion (1) ou l'identifiant (4),
- le dispositif comporte une unité de calcul (6) programmée pour comparer le compteur de cycles de connexion (1) avec une valeur seuil,
- le dispositif comportant un commutateur (62) configuré pour commuter une liaison électrique vers l'élément de connexion à fiche (7), dans la mesure où le compteur de cycles de connexion (1) ne dépasse pas la valeur seuil, ou pour couper une liaison électrique vers l'élément de connexion à fiche (7), dans la mesure où le compteur de cycles de connexion (1) dépasse la valeur seuil, et/ou
- l'unité de calcul (6) est programmée pour générer un avertissement, dans la mesure où le compteur de cycles de connexion (1) dépasse la valeur seuil.

5. Dispositif selon la revendication 4, selon lequel
- le moyen de détection est un capteur (71), et plus particulièrement un bouton mécanique ou un commutateur de proximité
ou
- le moyen de détection est configuré pour détecter une liaison électrique à l'aide d'une résistance interne.

6. Dispositif selon la revendication 4 ou 5, selon lequel
- la mémoire électronique (2) est située sur un serveur (3).

7. Dispositif selon l'une des revendications 4 ou 5, selon lequel
- la mémoire électronique (2) est située dans l'élément de connexion à fiche (7).

8. Support de données lisible par machine,
- sur lequel est stocké un microprogramme qui exécute le procédé selon l'une des revendications 1 à 3 lorsqu'il tourne sur un microprocesseur.

9. Microprogramme
- qui tourne sur un microprocesseur tout en exécutant le procédé selon l'une des revendications 1 à 3.
